Europäisches Patentamt

(19) European Patent Office

Office européen des brevets

(11) Publication number: **0 184 014**
**B1**

(12) **EUROPEAN PATENT SPECIFICATION**

(45) Date of publication of patent specification: **27.04.88**

(51) Int. Cl.⁴: **F 02 K 9/18, F 02 K 9/95**

(21) Application number: **85114120.0**

(22) Date of filing: **06.11.85**

(54) **A propellant configuration for a solid propellant rocket motor.**

(30) Priority: **06.12.84 US 678937**

(43) Date of publication of application:
**11.06.86 Bulletin 86/24**

(45) Publication of the grant of the patent:
**27.04.88 Bulletin 88/17**

(84) Designated Contracting States:
**BE CH DE FR GB IT LI NL SE**

(56) References cited:
**EP-A-0 059 142**
**DE-B-1 149 284**
**US-A-3 107 487**
**US-A-3 951 072**
**US-A-4 015 427**
**US-A-4 068 591**

**H.G. MÜNZBERG: "Flugantriebe, Grundlagen, Systematik und Technik der Luft- und Raumfahrtantriebe", 1972, pages 432-433, Springer-Verlag, Berlin, Heidelberg, DE**
**H. MIELKE: "Raketentechnik, eine Einführung", 1959, pages 77-79, VEB Verlag Technik, Berlin, DE**

(73) Proprietor: **Werkzeugmaschinenfabrik Oerlikon-Bührle AG**
**Birchstrasse 155**
**CH-8050 Zürich (CH)**

(72) Inventor: **Koorey, Alfred J.**
**1160 Kewannee Trail**
**Maitland Florida 32751 (US)**

Courier Press, Leamington Spa, England.

## 0 184 014

**Description**

The invention relates to a propellant configuration for a solid propellant rocket motor, in accordance with the prior art portion of claim 1.

A propellant configuration in accordance with the prior art portion of claim 1 is known from DE—A—1 149 284 in which the igniter assembly is arranged in axial prolongation to the central cavity of the main grain such that hot gases emanating from a nozzle of the igniter assembly are coaxially with central cavity of the main grain to ignite the main grain on the whole central cavity surface area.

It is desirable at the time an air launched vehicle is being fired, for the rocket motor to quickly accelerate the missile from the launch rail or launch rack, such that a clean separation will be obtained. It is also desirable, as the missile moves ahead of the launching aircraft, for the amount of rocket exhaust, including solid particulates being ingested into the engine of the aircraft, to be minimized.

Somewhat similarly, when dealing with shoulder launched weapons, it is desirable for the pressures and particulate matter effects on the soldier be minimized, and when bringing about the firing of a canister-launched surface-to-surface missile, it is most important to prevent the condensation of undesirable material on optical and laser windows.

Furthermore, in the launch of certain rocket powered missiles, it is desired to have an initial high mass flow from the rocket motor, followed by a much lower mass flow, with this then being followed by a gradually increasing mass flow until such time as a peak is reached just before motor burnout. The initial high mass flow mentioned above is obviously desirable in order for the missile to have sufficient thrust to clear the launch apparatus. However, previous attempts to attain the desired initial high mass flow usually resulted in the creation of large plumes, which were quite inconsistent with reliable aquisition of the missile by the launcher-mounted guidance equipment, with this latter problem being in addition to certain of the other factors mentioned hereinabove.

The customary approach to the goal of obtaining high initial thrust has been to resort to using a costly motor design that utilizes two different propellant formulations in order to bring about desired thrust characteristics. However, these previous attempts not only exceeded the cost budget, but also created an unusually high amount of particulate matter, that served to degrade the performance of the engine of the launching aircraft, or to jeopardize the well-being of the soldier launching a missile from his shoulder.

In addition, if a separate eject motor concept is utilized in connection with a canister-launched configuration, then the problem exists of either capturing the eject motor, with the attendant capture shock loading on the launcher, or else permitting the eject motor to follow the missile out of the canister, thereby creating a substantial amount of debris around the launcher when the missile motor is ignited.

The EP—A—0 059 142 document bears some superificial resemblance to the instant invention in that it disposes a propellant monoblock with the main grain having two different formed central cavity sections, first for the acceleration phase and the second for the cruising speed phase, whereas the first section shows six branches separated through interior flutes, four of the branches are smaller than the other two so that a high initial thrust is utilized.

The invention as claimed in claim 1 is intended to remedy these drawbacks. It solves the problem of how to design a propellant configuration for a rocket motor serving to provide the desired thrust characteristics as well as to minimize the problems of the launching aircraft, soldier, or launch canister.

This invention represents a design advantageously combining a high mass flow rate motor igniter with a high mass flow rate main propellant grain design, thereby to produce the initial high level of total impulse required to accelerate a certain missile to a velocity of 120 feet per second (36,6 m/s) within a canister length of under 7 feet (2,1 m).

In accordance with this advantageous new design, the use of a high mass flow rate igniter in combination with simultaneous main motor fluted grain burning is brought about to produce very high initial thrust. After igniter and main grain flutes burnout, the main grain continues to burn but at a lower thrust level, with this level progressively increasing to the point of burnout.

Quite significantly, the foregoing is accomplished utilizing the same propellant in both the igniter and the main grain.

Very close to the time of egress of the missile from its launching device, the igniter propellant is totally consumed, as are the flutes of the main grain, this resulting in a desired lowering of the thrust level. The rocket motor then burns normally in a progressive manner to produce the required missile velocity at burnout. Quite advantageously, all of the above is initiated by a single electrical signal from the launch command equipment, and accomplished within a common pressure vessel (i.e., no separate eject motor is required).

It is therefore an advantage of the invention to effectively combine a high mass flow rate igniter with a modified main grain design to produce a high mass flow for the short period of time during which the missile clears the launcher means.

It is another advantage of the invention to provide a desirably high mass flow-low mass flow-high mass flow characteristic for bringing about the launching of a rocket powered missile.

It is another advantage of the invention to achieve the high initial mass flow necessary for a rocket missile to clear the launch device, without incurring the formation of a large plume, or the creation of undesirable particulate matter that would impair the operation of the launch equipment or personnel.

2

It is another advantage of the invention to provide a rocket motor design obviating the cost associated with the use of two or more different propellant formulations or other expensive techniques.

It is another advantage to provide a novel igniter serving the functions of igniting the main grain on command and providing additional mass flow rate to aid in the missile ejection process.

One way of carrying out the invention is described in detail below with reference to drawings which illustrate only a specific configuration in which:

Fig. 1 is a cross sectional view of a preferred propellant configuration for a solid fuel rocket or the like, with this view revealing the mounting of an igniter assembly in the central cavity of the main grain,

Fig. 2 is a view generally along the lines of Fig. 1, but to a larger scale, and containing significant details of the centrally mounted igniter assembly,

Fig. 3 is an end view of the motor assembly of Fig. 2, taken of the end remote from the nozzle,

Fig. 4 is a cross sectional view of the igniter taken along lines 4—4 in Fig. 2,

Fig. 5 is a cross sectional view of the main grain taken along lines 5—5 in Fig. 2,

Fig. 6a is a view of a typical flute of the igniter, with the manner in which the entire igniter grain is consumed being indicated with reference to time,

Fig. 6b is a view of a typical flute of the main grain showing the manner in which the main grain flutes are consumed during the burning of the igniter to the same time scale,

Fig. 7 is a graph of thrust plotted versus time, with this graph revealing the large initial thrust immediately followed by a sharp dropoff; and

Fig. 8 is a graph generally along the lines of Fig. 7, but revealing in much greater detail, the mass flow from the igniter and from the motor grain during the first several milliseconds of burn.

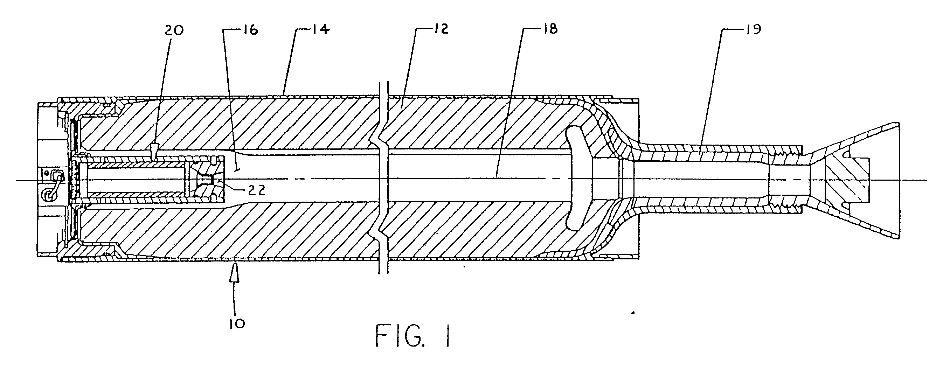

Fig. 1 shows certain internal portions of a rocket motor propulsion arrangement 10 in accordance with the invention, including the principal portion of solid propellant 12, also known as the main grain, which is generally in the configuration of a cylinder contained in a motor casing 14, of the type used in a missile. The main grain 12 is symmetrically disposed about the longitudinal centerline 18 of the rocket motor, and has a central bore or cavity 16 therein.

The onset of burning of the main grain 12 at the time of missile launch commences in the central cavity 16 of the propellant, with the flow of hot gases that result from the burning process travelling toward the right as viewed in Fig. 1, along the centerline 18 and out through nozzle 19. As a result, the missile travels to the left as viewed in Fig. 1. Burning of the main grain 12 is caused to commence at the desired time by the use of the igniter or igniter assembly 20, disposed in the central cavity 16, along the centerline 18.

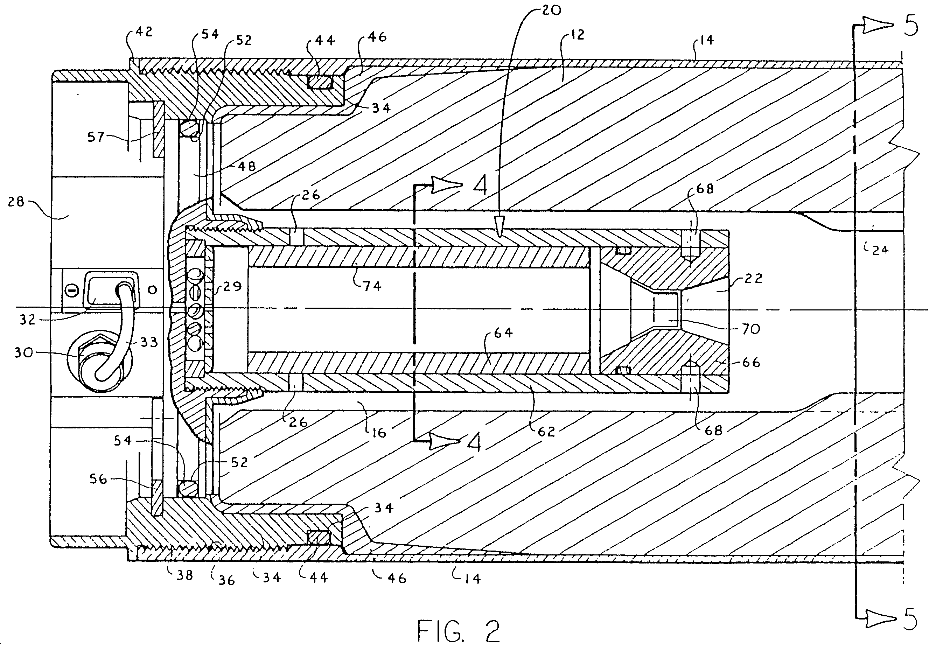

Fig. 2 shows substantial details of the igniter assembly 20 utilized in accordance with the invention. Shortly after the time of ignition of the igniter 20, hot gases are caused to emanate from the central port 22 on the aft face of the igniter 20, which causes the flutes 24 of the central portion of the main grain 12 to commence burning. Hot gases also emanate from a plurality of ports or holes 26 arrayed about the forward end of the igniter 20, that is, the end of the igniter 20 remote from the central port 22. These ports 26 are preferably circumferentially spaced, and some 1/8 inch (3 mm) in diameter, with the hot gases from these ports 26 causing ignition of the solid propellant at the closed end of the cavity 16. Internal construction of the igniter assembly 20 will shortly be described to a fuller extent.

As will be elaborated hereinafter, the heart of the invention involves the fact that the propellant grain design of the igniter 20 and the propellant grain design of the main grain 12 are carefully sized so as to produce the high mass flow rate (total impulse) required to eject the missile from the launch means.

After launch, the igniter propellant by design has been totally consumed, and the flutes have disappeared from the main grain 12, leaving only a generally cylindrical main grain configuration, having a desirable burn characteristic, for furnishing propulsion to the missile.

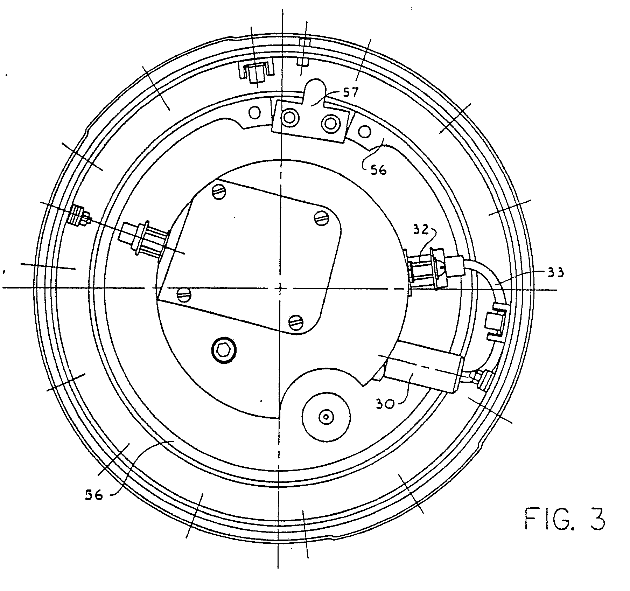

The igniter assembly 20 is directly supported from the safe and arm device 28, which is generally circular, and mounted on the motor casing 14 at the forward end of the main grain 12. The safe and arm device 28 is designed to prevent accidental ignition of the igniter, but functions to bring about actuation of the igniter at the desired time. An initiator 30 screwed into a lower portion of the safe and arm device 28, and an electrical connector 32 connected thereto by electrical leads 33 make possible the firing of the igniter by means of an electrical signal provided from a remote location; note also the details in Fig. 3.

The safe and arm device 28 is a conventional in-line, out-of-line barrier device serving to prevent inadvertent ignition of the motor. Since it is not per se a part of the invention, it is not illustrated herein. A safe and arm device manufactured by any of several well known companies would be sufficient in this instance.

At the time it is desired for the motor to function, an arming electrical signal is transmitted to a solenoid, causing its internal mechanism to rotate some 45 degrees. A solenoid shaft extension is driven in rotation by the solenoid motion. A hole in the shaft is normally out of alignment with a pin, but upon the shaft being rotated by the solenoid action, the hole aligns with the pin.

When an electrical "fire" command is received by the initiator 30, combustion gases from the initiator force the pin into the hole in the shaft, thereby exposing a hole in the safe and arm housing, latter hole leading to the booster charge in the cavity in the ignitor housing. Preferably $BKNO_3$ pellets are used, with the burning of such pellets causing an intense flame exiting through a perforate steel plate 29, into the igniter main cavity, this of course causing prompt ignition of the igniter propellant.

The fire command can be executed from 0—10 seconds after the solenoid has been actuated to expose the hole in the housing of the safe and arm device.

In accordance with a preferred configuration of the invention a threaded mounting ring 34 for supporting the safe and arm device 28 and the igniter assembly 20 is utilized with ring 34 being visible in Fig. 2, and also being known as an adapter ring. The ring 34 is provided with external threads 36, which are closely received in internal threads 38 disposed around the interior of the end of the motor casing 14. A circumferential shoulder 42 is provided near the forward end of the adapter ring 24, and this shoulder is brought up flush with the forward flange of the motor casing 14 during ring installation. Undesired leakage between the threads is prevented by providing a circumferential groove adjacent the rear edge of the adapter ring 34, in which groove is disposed an O-ring 44. The adapter ring 34 may be made of aluminium or the like in the interests of lightness, and integrity thereof during motor burn is assured by the use of a thermal insulator 46 serving as a protective member. The member 46 is of generally toroidal configuration, and is made of a rubber designed to withstand high temperature, such as 6000°R (3060°C) for the requisite burn time which normally is less than 5 seconds.

The safe and arm device 28 is provided with a circular mounting flange 48 that is closely received in the interior bore of the adapter ring 34. The mounting flange 48 is provided with a circular exterior groove 52, in which O-ring 54 is disposed. Latter O-Ring prevents high pressure, high temperature gas from flowing downwardly from the central cavity 16. Undesired movement of the flange 48 away from the illustrated position is prevented by the use of snap ring 56, received in a suitable groove in the interior bore of the adapter ring 34. Preferably a retaining ring key 57 is used that prevents the snap ring 56 being dislodged. The key 57 is best shown in Fig. 3.

The structural details of the mounting arrangement for the igniter assembly 20 on the centerline of the central cavity 16 are presented as background information only, and no invention is believed to reside in the mounting arrangement per se.

With continued reference to Fig. 2, it will be seen that there have been illustrated certain additional details of the igniter assembly 20. The igniter serves the important functions of igniting the main grain 12 on command, and providing the additional mass flow rate to perform the missile eject process. The generally cylindrical outer case 62 of the igniter is preferably made of high temperature resistant material such as glass phenolic, for this latter material is not appreciably damaged by the high temperature combustion taking place inside the igniter as well as around its circumference.

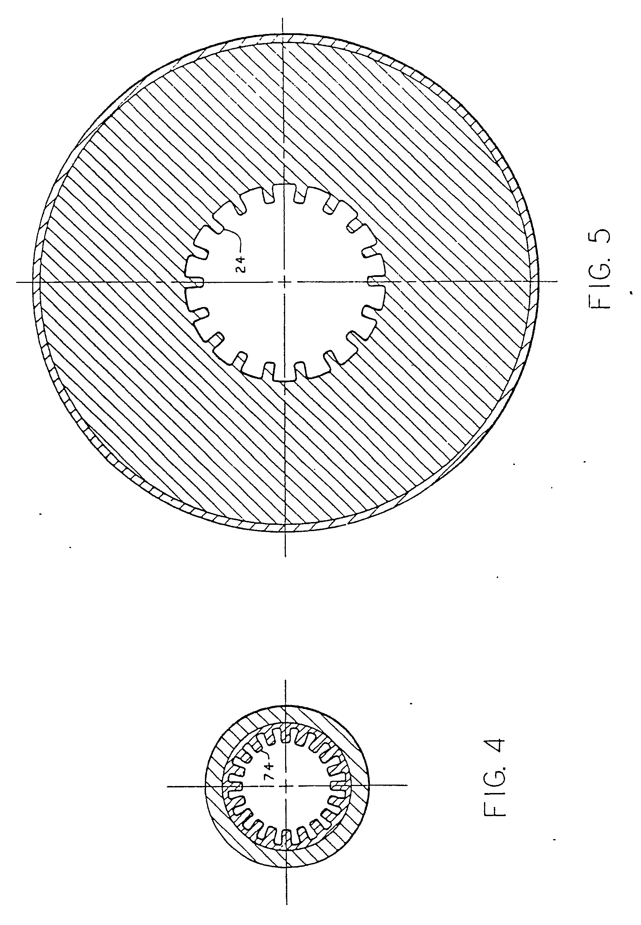

Interiorally of the igniter case 62 is an igniter propellant 64 which, quite importantly, is the same propellant as the main grain 12 utilized in the motor casing 14. The configuration of the propellant 64 will be discussed shortly, in connection with Fig. 4. Although the invention is not to be limited to any particular propellant, preferably a minimum smoke, composite-modified double base propellant is to be used, inasmuch as this propellant offers high energy content per pound, the desired high burn rate, and produces a minimum quantity of smoke and plume particulates. As is known, particulates harm laser efforts by absorbing laser energy, and impact adversely the S/N (signal/noise) ratio at the detector receivers.

It is important to note that the utilization of the same propellant in the igniter 20 and in the main grain 12 minimizes development costs and manufacturing costs, and enhances overall reliability.

Secured in the aft end of the generally cylindrical outer igniter case 62 as shown in Fig. 2 is nozzle member 66, the central aperture 22 of which is configured to produce a specific angle of igniter emitted gases, thus to enhance ignition of the flutes 24 of the main grain 12. The nozzle is preferably made of silica-phenolic material, and is held in place in the aft end of the igniter case by the use of cement, as well as by a plurality of radially disposed pins 68. A plastic plug 70 is installed in the igniter nozzle, which serves to increase the pressure rise rate of the igniter. This in turn causes the igniter propellant 64 to ignite faster and to burn faster, providing the high mass flow rate required of the igniter in order for the missile to properly clear the launcher. The plug 70 is blown out only at such time as pressure has built up in the interior of the igniter assembly 20 to a desirably high value.

Quite importantly, and as shown in Fig. 4, the interior portion of propellant 64 of the igniter 20 is provided with a plurality of flutes 74 spaced about the centerline of the igniter 20. These flutes desirably increase the surface area over which intense burning can take place at the time of missile launch. Similarly, and as shown in Fig. 5, there is likewise provided the central portion of the main grain 12 with flutes 24, as was mentioned in connection with Fig. 2. As a result of the provision of the flutes 24, the burn area is desirably increased during the relatively brief igniter burn.

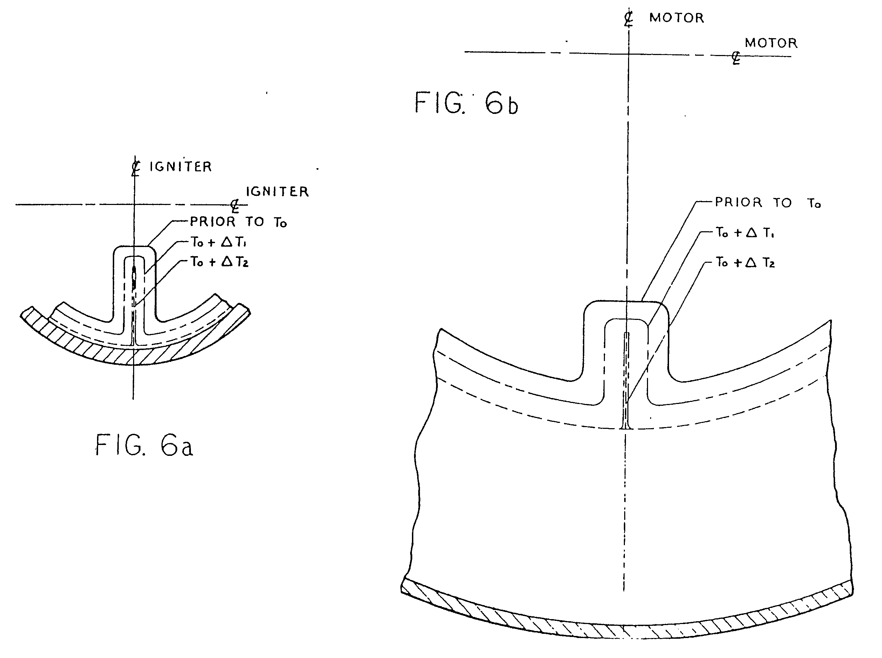

In Fig. 6a there is shown to a somewhat larger scale a typical flute of the type utilized in the igniter 20, with this view revealing the progressive burning thereof. It is important to note that the entire illustrated portion of the igniter 20 has been consumed by the time the flute portion of the main grain 12 has burned away. Similarly, in Fig. 6b, there is shown to the same time scale, the progressive burning of a typical flute 24 of the main grain 12, with it to be noted that a considerable portion of the propellant of the main grain 12 still remains after the igniter propellant 64 and the flutes 24 of the main grain 12 have burned away.

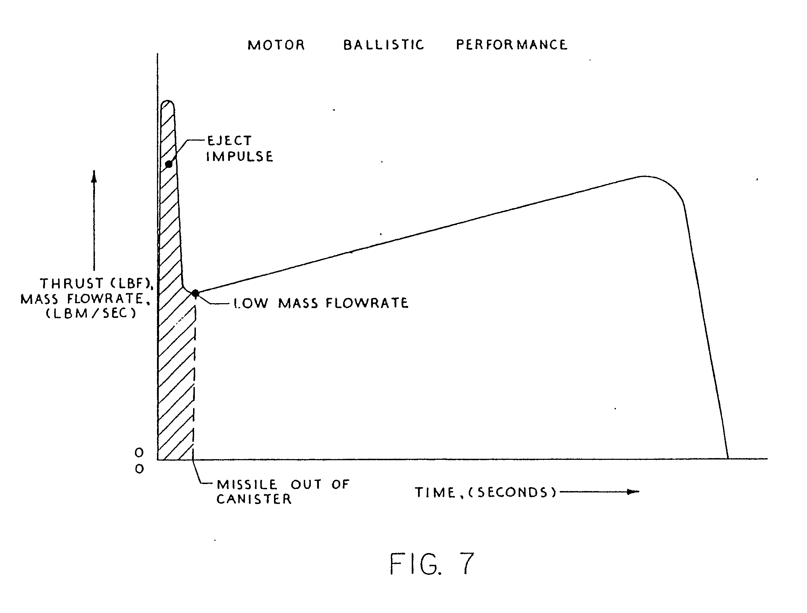

Fig. 7 represents a plot of mass flow rate versus time, with this graph clearly revealing the large initial thrust, followed after burnout of the igniter 20 by a sharp drop to a level representing the thrust provided by main grain 12 burning after burnaway of the flutes 24. The sharp drop usually takes place approximately .10 to .12 seconds after ignition.

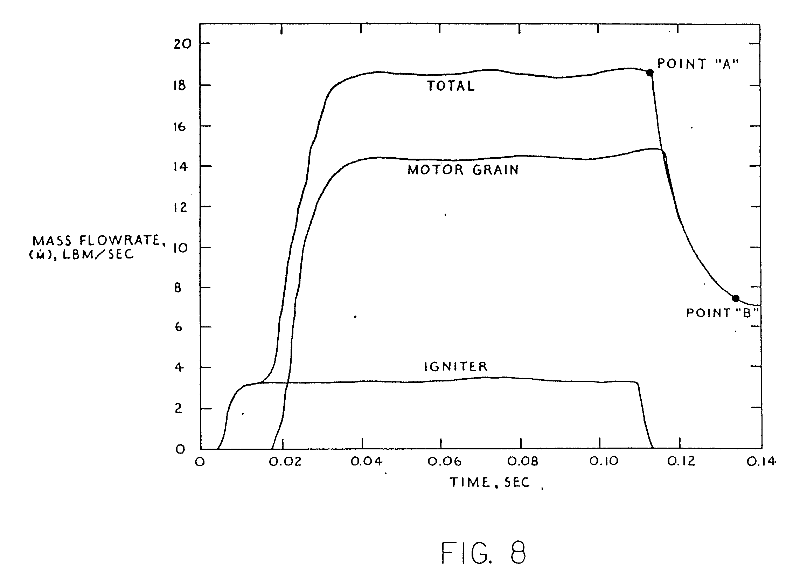

Fig. 8 shows in greater detail, the interrelationship of the burn time of the flutes 24 of the main grain 12,

4

and the igniter 20. As will be understood from a study of this figure, the entire igniter 20 has been consumed by the time the flutes 24 of the main grain 12 have burned away, with these events taking place by the time the missile leaves the launch tube.

An enhanced understanding of Fig. 8 and certain other important aspects of this invention will be achieved from a study of the following analysis.

The invention takes advantage of the classical motor internal ballistic response to a sudden change in propellant burn surface area characteristic mathematically defined as follows:

Using the standard mass balance equation:

$$\dot{\omega} = A_b pr = \frac{P_c A_t g}{C^*}$$

Where:

$\dot{\omega}$ = mass flow rate in lb/sec. (kg/s)
$A_b$ = burn surface area in in.$^2$ (cm$^2$)
p = density of propellant in lb/in$^3$ (kg/cm$^3$)
r = propellant burn rate equitation ($= aP_c^n$) where
     a is a constant
     $P_c$ is pressure in psi (N/cm$^2$)
     n is the burn rate slope
$P_c$ = operating chamber pressure in psi (N/cm$^2$)
$A_t$ = nozzle throat area in in.$^2$ (cm$^2$)
g = gravitational constant (32.147 ft/sec.$^2$) (9,81 m/s$^2$)
$C^*$ = characteristic velocity in ft/sec. (m/s)

By dividing the initial conditions of mass flow (immediately prior to igniter and main grain flute 24,74 burnout, subscript 1) by the final conditions of mass flow (immediately after igniter and main grain flute burnout, subscript 2),

$$\frac{\dot{\omega}_1 = A_{b_1} pr = \dfrac{P_{c_1} A_{t_1} g}{C^*}}{\dot{\omega}_2 = A_{b_2} pr = \dfrac{P_{c_2} A_{t_2} g}{C^*}}$$

The relationship between operating chamber pressure and propellant burn surface area is thus obtained. Cancelling and substituting leads to:

$$\frac{A_{b_1} P_{c_1}{}^n}{A_{b_2} P_{c_2}{}^n} = \frac{P_{c_1} A_{t_1}}{P_{c_2} A_{t_2}}$$

Assuming negligible throat erosion during the very short time period of 100 milliseconds and re-arranging terms, the following is obtained:

$$\left[\frac{\dfrac{A_{b_1}}{A_{t_1}}}{\dfrac{A_{b_2}}{A_{t_1}}}\right] = \left(\frac{P_{c_1}}{P_{c_2}}\right)^{1-n} \; : \; \left[\frac{\dfrac{A_{b_1}}{A_{t_1}}}{\dfrac{A_{b_2}}{A_{t_1}}}\right]^{\frac{1}{1-n}} = \frac{P_{c_1}}{P_{c_2}}$$

The geometrical design implementation of the invention may be defined as follows:

I. Main grain inner-bore geometry:

| | | |
|---|---|---|
| Length of main grain | 32.18 inches | (81.74 cm) |
| Length of flutes of main grain | 24.805 inches | (63 cm) |
| Diameter of grain bore, average | 2.422 inches | (6.15 cm) |
| Height of flutes | .244 inches | (0.62 cm) |
| Average flute width   Forward | .095 inches | (0.24 cm) |
|                  Aft | .119 inches | (0.30 cm) |

A. The burn surface area ($A_b$) of the main grain *at motor ignition* is found to be (Prior to $T_0$ of Fig. 6b):

$$A_{b_{center\ perforate}} = circumference \times length - (average\ width\ of\ flute \times length\ of\ flute \times number\ of\ flutes)$$
$$= [(\pi \times 2.422)32.18] - (.107 \times 24.805 \times 18)$$
$$= 197.09\ in.^2\ (1271.55\ cm^2)$$

$$A_{b_{flutes}} = (average\ flute\ width + 2 \times height) \times length \times number\ of\ flutes$$
$$= [.107 + (2 \times .244)] \times 24.805 \times 18$$
$$= 265.66\ in.^2\ (1713.93\ cm^2)$$

$$A_{b_{total}} = A_{bc.p.} + A_{b_{flutes}} = 197.09 + 265.66 = \underline{462.75\ in.^2}$$
$$= (2985.48\ cm^2)$$

B. The burn surface area of the main grain *immediately prior to flute burnout* ($T_0 + T_1$ of Fig. 6b):

$R_1$ = initial R at motor ignition (1.211 inches) plus one-half of the initial flute thickness (.107 in.)
$$= 1.211 + .054 = 1.265\ inches\ (3.213\ cm)$$
$l_1$ = initial height of flute at motor ignition (.244 inches) minus one-half of the initial flute thickness (.107 inches)
$$= .244 - .054 = .19\ inches\ (.483\ cm).$$

Solving for the main grain burn surface area, the following is obtained:

$A_b$ of center perforate:
$$A_{bc.p.} = \pi D_1 \times Length$$
$$= \pi(2 \times 1.265)\ (32.18)$$
$$= 255.77\ in.^2$$
$A_b$ of Flute:
$$A_{b_F} = 2 \times 1 \times length \times No.\ of\ flutes$$
$$= 2 \times .19 \times 24.805 \times 18$$
$$= 169.67\ in.^2$$
$$A_{b_{total}} = A_{bc.p.} + A_{b_F} = 255.77 + 169.67 = \underline{425.44\ in.^2}$$
$$= (2744.77\ cm^2)$$

C. The burn surface area of the main grain *immediately after flute burnout* is found to be ($T_0 + T_2$ of Fig. 6b):

Inner bore diameter = initial dia. + burn back of 0.0535 in. on radns

$$= 2.422 + (2 \times \frac{.107}{2})$$

$$= 2.525\ in.$$
therefore $A_b$ = circ. × grain length
$$= [\pi \times 2.529] \times 32.18$$
$$= \underline{255.67\ in.^2}$$
$$= (1649.48\ cm^2)$$

II. Igniter fluted grain configuration:

| | |
|---|---|
| Length of igniter propellant grain | 4.155 inches (10.554 cm) |
| Diameter (outside) | 1.563 inches (3.970 cm) |
| (inside) | 1.448 inches (3.678 cm) |
| Flute height | .200 inches (0.508 cm) |
| Flute thickness (average) | .130 inches (0.330 cm) |

A. The burn surface area of the igniter grain *immediately prior to motor ignition* is found to be (Prior to $T_0$ of Fig. 6a):

$$A_b = [\pi D \times L] - [20(.130) \times L] + [(21 + .130) \times 20 \times L]$$
$$= [\pi(1.448)(4.155)] - [20(.130)(4.155)] + [(2 \times .20 + 1.30) \times 20 \times 4.155]$$
$$= 18.90 - 10.80 + 44.04$$
$$= \underline{52.143\ in.^2}\ (132.44\ cm^2)$$

B. The burn surface area of the igniter grain *immediately prior to igniter propellant burnout* is found to be ($T_0+T_1$ of Fig. 6a):

$$A_b=[\pi D \times L]+[21 \times 20 \times L]$$
$$=[\pi(1.563)(4.155)]+[2(.142)(20)(4.155)]$$
$$=20.40+23.60$$
$$=\underline{44.0 \text{ in.}^2} \ (111.76 \text{ cm}^2)$$

C. The burn surface area of the igniter grain *immediately after igniter propellant burnout* is 0.0 $IN^2$ ($T_0+T_2$ of Fig. 6a)

Going back to the generated mathematical expression which defines the relationship between equilibrium operating pressure and burn surface area and inserting the burn surface areas for the geometric conditions *immediately prior* to igniter and main grain flute burnout ($A_b$) and *immediately after* igniter and main grain flute burnout ($A_b$) the following is obtained:

$$A_{b_1}=A_{b_{main \ grain}}+A_{b_{igniter}}=(425.44)+(44.0)$$
$$=469.44 \text{ in.}^2 \ (3028.64 \text{ cm}^2)$$
$$A_{b_2}=A_{b_{main \ grain}}+A_{b_{igniter}}=(255.67)+(0)$$
$$=255.67 \text{ in.}^2 \ (1649.48 \text{ cm}^2)$$

$A_{t_2}=A_{t_1}=1.507$ in.$^2$ (9.723 cm$^2$) (by design)

n (propellant burn rate exponent=0.33

therefore:

$$\left[ \frac{\frac{469.44}{1.507}}{\frac{255.67}{1.507}} \right]^{\frac{1}{1-.33}} = \frac{P_{c_1}}{P_{c_2}}=2.477$$

$$P_{c_2}=.404 \ P_{c_1}$$

This is to the effect that the chamber operating pressure immediately *after* igniter and main grain flute burnout is 40.4 percent of the chamber operating pressure immediately *before* igniter and main grain flute burnout.

Mass flow rate ($\dot{\omega}$) is essentially proportional to chamber operating pressure, and motor thrust is related to operating chamber pressure via the expression

$$\text{Thrust}=P_c A_t C_f.$$

It is thus to be seen that there has been achieved the desired significant reduction in rocket motor thrust at canister egress (approximately 100 to 140 milliseconds after motor ignition) by a novel and highly advantageous rapid reduction in propellant burn surface area, as illustrated by comparing point "A" with point "B" in Fig. 8.

**Claims**

1. A propellant configuration for a solid propellant rocket motor, comprising a generally cylindrical housing (14) containing an essentially cylindrical main grain (12) having a central cavity (16) and a plurality of interior flutes (24) formed in the main grain (12) about the central cavity (16) and an igniter assembly (20) containing an igniter grain (64) having a central cavity and having means therein for bringing about combustion, so that hot gases can flow therefrom at the time the igniter has been actuated to the main grain (12) to cause burning thereof to take place, characterised in that the igniter assembly (20) is disposed in the central cavity (16) such that at least part of such flow of hot gases being directed on the flutes (24) formed in the interior (16) of the main grain (12), with the burn surface area of the igniter grain (64) being in a pre-established relationship to the burn surface area of the fluted portion of the main grain (12) such that the igniter grain (64) will be totally consumed at the time that the flutes (24) of the main grain (12) are consumed, thereby reducing the total burn area of the main grain (12) to a value which produces a distinct and highly desirable reduction in the total motor mass flow rate adjacent the end of the launch mechanism.

2. The propellant configuration as claimed in claim 1, wherein the propellants utilized in the main grain (12) and in the igniter grain (64) are the same.

3. A propellant configuration as claimed in claim 1, wherein the igniter assembly (20) has a plurality of outlet ports (22, 26) therein, through which hot gases flow when combustion has been brought about.

.Patentansprüche

1. Treibsatzanordnung für einen Feststoffraketenmotor, enthaltend ein zylinderförmiges Gehäuse (14) mit einer zylinderförmigen Haupttreibladung (12), welche einen zentralen Hohlraum (16) und eine Vielzahl von inneren Kannelierungen (24) im Bereich des Hohlraumes (16) aufweist, und einer Zündvorrichtung (20), welche eine Zündtreibladung (64) mit einem zentralen Hohlraum und Mittel zum Entzünden aufweist, wobei nach dem Entzünden heisse Gase von der Zündvorrichtung (20) zur Haupttreibladung (12) ausströmen und diese entzünden, dadurch gekennzeichnet, dass die Zündvorrichtung (20) im zentralen Hohlraum (16) derart angeordnet ist, dass mindestens ein Teil der heissen Gase den Kannelierungen (24) der Haupttreibladung (12) im Hohlraum (16) zugeleitet werden, und dass die Brennfläche der Zündtreibladung (64) ein derart vorbestimmtes Verhältnis zu der Brennfläche der Haupttreibladung (12) aufweist, dass die Zündtreibladung (64) und die Kannelierungen (24) der Haupttreibladung (12) gleichzeitig aufgebraucht sind, wodurch die totale Brennfläche der Haupttreibladung (12) reduziert wird auf einen Wert, welcher eine erhebliche, angestrebte Reduktion der Abbrandgeschwindigkeit am Ende der Startphase erbringt.

2. Treibsatzanordnung gemäss Anspruch 1, dadurch gekennzeichnet, dass die Haupttreibladung (12) und die Zündtreibladung (64) das gleiche Treibmittel aufweisen.

3. Treibsatzanordnung gemäss Anspruch 1, dadurch gekennzeichnet, dass die Zündvorrichtung (20) eine Vielzahl von Oeffnungen (22, 26) aufweist, durch welche heisse Gase nach dem Entzünden ausströmen.

**Revendications**

1. Configuration de propergol pour un moteur fusée à propergol solide comprenant un boîtier (14) de forme générale cylindrique qui contient un bloc de poudre principal (12) essentiellement cylindrique ayant une cavité centrale (16) et une pluralité de cannelures intérieures (24) formées dans le bloc de poudre principal (12) autour de la cavité centrale (16), et un ensemble allumeur (20) contenant un bloc de poudre d'allumeur (64) qui présente une cavité centrale et des moyens contenus dans cet ensemble pour provoquer la combustion, de manière que les gaz chauds puissent s'en écouler à l'instant où l'allumeur a été actionné, vers le bloc de poudre principal (12) pour déclencher la combustion de celui-ci, caractérisée en ce que l'ensemble allumeur (20) est disposé dans la cavité centrale (16) de telle manière qu'au moins une partie de ce flux de gaz chauds soit dirigée vers les cannelures (24) formées dans le volume intérieur (16) du bloc de poudre principal (12), l'aire de la surface de combustion du bloc de poudre (64) de l'allumeur étant liée par une relation pré-établie à l'aire de la surface de combustion de la partie cannelée du bloc de poudre principal (12), de telle manière que le bloc de poudre (64) de l'allumeur soit entièrement consumé à l'instant où les cannelures (24) du bloc de poudre principal sont consumées, en réduisant ainsi l'aire totale de combustion du bloc de poudre principal (12) à une valeur qui produit une réduction distincte et très souhaitable du débit massique total du moteur vers la fin du mécanisme de lancement.

2. Configuration de propergol selon la revendication 1, dans laquelle les propergols utilisés dans le bloc de poudre principal (12) et dans le bloc de poudre (64) de l'allumeur sont les mêmes.

3. Configuration de propergol selon la revendication 1, dans laquelle l'ensemble allumeur (20) présente une pluralité d'orifices de sortie (22, 26) à travers lesquels les gaz chauds s'écoulent lorsque la combustion a été déclenchée.

FIG. 1

FIG. 2

0 184 014

FIG. 3

FIG. 4

FIG. 5

℄ MOTOR

MOTOR ℄

FIG. 6b

— PRIOR TO $T_0$

$T_0 + \Delta T_1$

$T_0 + \Delta T_2$

℄ IGNITER

IGNITER ℄

— PRIOR TO $T_0$

$T_0 + \Delta T_1$

$T_0 + \Delta T_2$

FIG. 6a

MOTOR    BALLISTIC    PERFORMANCE

EJECT
IMPULSE

THRUST (LBF),
MASS FLOWRATE,
(LBM/SEC)

LOW MASS FLOWRATE

O
O

MISSILE OUT OF
CANISTER

TIME,(SECONDS)

FIG. 7

0 184 014

FIG. 8